# EUROPÄISCHE PATENTSCHRIFT

(11) **EP 1 599 370 B1**
(45) Veröffentlichungstag und Bekanntmachung des Hinweises auf die Patenterteilung: **23.08.2006**
(21) Anmeldenummer: 04710789.1
(22) Anmeldetag: 13.02.2004
(51) Int. Cl.: B60R 22/26

(54) **VORRICHTUNG ZUM BEFESTIGEN EINES GURTSCHLOSSES EINES SICHERHEITSGURTES AN EINEM FAHRZEUGSITZ**
DEVICE FOR FIXING A BELT LOCK OF A SAFETY BELT IN A VEHICLE SEAT
DISPOSITIF POUR FIXER UNE BOUCLE DE CEINTURE DE SECURITE A UN SIEGE DE VEHICULE

(30) Priorität: 28.02.2003 DE 10310018
(43) Veröffentlichungstag der Anmeldung: 30.11.2005
(73) Patentinhaber: Brose Fahrzeugteile GmbH & Co. KG, Coburg, 96450 Coburg (DE)
(72) Erfinder: KRÖNER, Gregor, 96120 Bischberg (DE)
(74) Vertreter: Ninnemann, Detlef
(86) Internationale Anmeldenummer: PCT/DE2004/000300
(87) Internationale Veröffentlichungsnummer: WO 2004/076247

(56) Entgegenhaltungen:
- DE-A- 10 034 441
- US-A- 3 977 725
- US-A- 6 048 034
- US-A1- 2002 024 242
- US-B1- 6 517 157

## Beschreibung

Die Erfindung betrifft eine Vorrichtung zum Befestigen eines Gurtschlosses eines Sicherheitsgurtes an einem Fahrzeugsitz gemäß dem Oberbegriff des Anspruchs 1. Eine derartige Vorrichtung ist aus den US 6 517 157 B bekannt.

Aus der US 3 977 725 A ist ein längsverstellbarer Fahrzeugsitz mit einem Sitzuntergestell bekannt, das über eine Längsverstelleinrichtung mit dem Fahrzeugboden verbunden ist. Die Längsverstelleinrichtung umfasst zwei Schienenlängsführungen mit in Sitzlängsrichtung zueinander verschiebbaren und sich in Sitzlängsrichtung erstreckenden Führungsschienen, von denen eine Unterschiene mit dem Fahrzeugboden und eine in der Unterschiene geführte Oberschiene mit dem Sitzuntergestell verbunden ist, so dass mit einer Verschiebung der Oberschiene die Einstellung der Längsposition des Fahrzeugsitzes vorgenommen werden kann.

Dem Fahrzeugsitz ist ein Gurtschloss eines Sicherheitsgurtes zugeordnet, der zur Sicherung der Position eines auf dem Fahrzeugsitz befindlichen Fahrzeuginsassen dient. Das Gurtschloss ist zum Einen an einer Oberschiene der Längsverstelleinrichtung des Fahrzeugsitzes befestigt, damit das Gurtschloss bei einer Längsverstellung des Fahrzeugsitzes aus Komfortgründen stets dieselbe Position am Sitzuntergestell beibehält. Dabei erfolgt die Verbindung des Gurtschlosses mit der Oberschiene der Längsverstelleinrichtung über einen Haltewinkel mit einer Befestigungsstelle im hinteren Bereich des Sitzuntergestells, an das die Sitzlehne angelenkt ist. Zusätzlich ist das Gurtschloss an einem Bolzen befestigt, der mit einem Sitzhöhen-Verstellmechanismus des Kraftfahrzeugsitzes verbunden ist, so dass die Gurtspannung bei einer Sitzhöhenverstellung nicht verändert wird. Der Bolzen dient jedoch nicht der Aufnahme von Crashkräften, die auf den Kraftfahrzeugsitz oder eine auf dem Kraftfahrzeugsitz befindliche Personim Falle eines Unfalls einwirken.

Bei der Befestigung eines Gurtschlosses an einer Schienenlängsführung für einen Kraftfahrzeugsitz besteht grundsätzlich das Problem, dass in einem Crashfall auf das Gurtschloss sehr große Kräfte einwirken, wenn ein auf dem Fahrzeugsitz befindlicher Fahrzeuginsasse durch den diesem Gurtschloss zugeordneten Sicherheitsgurt aufgefangen wird. Dies kann bei besonders schweren Unfällen dazu führen, dass sich entweder der Haltewinkel verformt, d.h. gestreckt wird, so dass sich daraus eine unerwünschte Vorverlagerung des Gurtpunktes ergibt, oder der Haltewinkel sich von der Oberschiene löst, indem beispielsweise eine der Verbindung des Haltewinkels mit der Oberschiene dienende Schweißnaht ausgeschält wird, oder die Verbindung der Oberschiene mit der Unterschiene der Schienenlängsführung gelöst wird, was zu einer unkontrollierten Bewegung des Fahrzeugsitzes mit dem darauf befindlichen Fahrzeuginsassen führt.

Die vorstehend dargelegte Problematik kann noch dadurch verstärkt werden, dass bei einem kurzen Abstand der Schienenlängsführungen ein entsprechend langer Hebel des Haltewinkels erforderlich ist, um eine Verbindung zwischen der Oberschiene und einer Seite des Fahrzeugsitzes herzustellen. Der verlängerte Hebel des Haltewinkels führt bei gleichen Crashkräften zu einer Verstärkung des auf die Befestigungsstelle des Haltewinkels an der Oberschiene einwirkenden Drehmoments, so dass die Gefahr einer Zerstörung der Verbindung des Haltewinkels mit der Oberschiene, die Gefahr des Ausreißens der Oberschiene aus ihrer Verbindung mit der Unterschiene und die Gefahr eines Streckens des Haltewinkels noch verstärkt wird.

Aufgabe der vorliegenden Erfindung ist es, eine Vorrichtung zum Befestigen eines Gurtschlosses eines Sicherheitsgurtes an einem Fahrzeugsitz der eingangs genannten Art anzugeben, die die Gefahr einer crashbedingten starken Vorverlagerung des Gurtpunktes oder die Trennung der Verbindung des Gurtschlosses mit der Befestigung im Fahrzeugsitz bei unverändertem Bedienungskomfort ausschließt oder zumindest minimiert.

Diese Aufgabe wird erfindungsgemäß durch eine Vorrichtung mit den Merkmalen des Anspruchs 1 gelöst.

Die erfindungsgemäße Lösung beseitigt oder minimiert zumindest die Gefahr einer crashbedingten starken Vorverlagerung des Gurtpunktes bzw. eines Trennens der Verbindung des Gurtschlosses mit der Befestigung am Fahrzeugsitz, ohne dass der Bedienungskomfort bei einer Längs- bzw. Höhenverstellung des Fahrzeugsitzes verringert wird, da eine gleichbleibend optimale Positionierung und Ausrichtung des Gurtschlosses trotz der Schwenkbarkeit des Querrohres das Öffnen und Schließen des Sicherheitsgurtes erleichtert.

Dabei erweist sich die erfindungsgemäße Lösung insbesondere bei Schienenlängsführungen mit geringem Abstand als vorteilhaft, bei denen die Gefahr einer Zerstörung der Verbindung des Gurtschlosses mit dem Fahrzeugsitz infolge eines langen Hebelarms eines Haltewinkels besonders groß ist.

Bei der erfindungsgemäßen Befestigungsvorrichtung werden crashbedingte Kräfte direkt in das Querrohr eingeleitet, so dass keine zusätzlichen Verbindungs- oder Versteifungsmittel erforderlich sind, die die eingangs genannten Probleme verursachen. Da das die Oberschienen verbindende Querrohr zur Aufnahme crashbedingter Kräfte ausgelegt ist und im Crashfall die vom Sicherheitsgurt ausgehende Belastung auf beide Schienenlängsführungen verteilt, wird auch die Gefahr eines Trennens der der Gurtschlossbefestigung zugeordneten Oberschiene von deren Unterschiene minimiert.

Eine vorteilhafte Ausgestaltung der erfindungsgemäßen Lösung ist dadurch gekennzeichnet, dass die Aufnahme einen mit dem Querrohr verbundenen Adapter mit einem Adapterflansch zur Anbindung des Gurtschlosses aufweist.

Der Adapter kann wahlweise fest mit dem Querrohr verbunden werden und damit einer Drehbewegung des Querrohres folgen oder alternativ auf das Querrohr aufgesteckt werden, so dass das Querrohr eine Öffnung des Adapterflansches drehbeweglich durchgreift und die Ausrichtung des Adapters unabhängig von einer beispielsweise zur Sitzhöhenverstellung erforderlichen Drehung des Querrohres erhalten bleibt.

Die Ausgestaltung und Anbringung des Adapters kann auf unterschiedliche Weise erfolgen. In einer ersten Ausführungsform ist der Adapter insbesondere auf das Querrohr aufgesteckt und über einen Verbindungsflansch mit einem Basiselement des Fahrzeugsitzes verbunden. Mit diesen Mitteln behält der Adapter eine vorgegebene Ausrichtung bei, so dass zusätzliche Führungsmittel zur Ausrichtung des Gurtschlosses nicht erforderlich sind.

Das Basiselement, mit dem der Verbindungsflansch beispielsweise über eine Schweißverbindung verbunden ist, kann aus einem das Querrohr aufnehmenden und beispielsweise mit der Oberschiene der Schienenlängsführung verbundenen Lagerbock oder aus einem Sitzseitenteil des Fahrzeugsitzes bestehen.

Alternativ kann der Adapter einen in das stirnseitige Ende des Querrohres einsetzbaren Bolzen und einen Adapterflansch zur Anbindung des Gurtschlosses aufweisen.

Diese Ausgestaltung des Adapters ist insbesondere dann vorteilhaft einsetzbar, wenn der Abstand der Schienenlängsführungen etwa der Breite des Fahrzeugsitzes entspricht, so dass auf einen zusätzlichen Verbindungsflansch verzichtet werden kann.

Insbesondere bei einer drehfesten Verbindung des Adapters zur Anbindung des Gurtschlosses an ein dreh- bzw. schwenkbares Querrohr insbesondere eines höhenverstellbaren Sitzuntergestells, kann als zusätzliches Mittel zur gleichbleibenden Ausrichtung des Gurtschlosses eine zusätzliche Gurtschlossführung zur Aufnahme und Ausrichtung des Gurtschlosses vorgesehen werden, die vorzugsweise mit einer Blende des Sitzseitenteils des Fahrzeugsitzes verbunden wird. Die Gurtschlossführung kann aber auch bei einem auf das Querrohr aufgesteckten Adapter vorgesehen werden werden, bei dem das Querrohr eine Öffnung des Adapterflansches drehbeweglich durchgreift und damit die Ausrichtung des Adapters unabhängig ist von einer beispielsweise zur Sitzhöhenverstellung erforderlichen Drehung des Querrohres.

Die erfindungsgemäße Aufnahme kann an einem Endbereich des Querrohres oder an beiden Endbereichen des Querrohres vorgesehen werden, so dass der Fahrzeugsitz sowohl auf der rechten als auch auf der linken Seite eines Fahrzeuges eingesetzt werden kann.

Anhand von in der Zeichnung dargestellten Ausführungsbeispielen soll der der Erfindung zugrunde liegende Gedanke näher erläutert werden. Es zeigen:
- Fig. 1 -: eine perspektivische Ansicht eines Sitzuntergestells mit an den Endbereichen eines Querrohres angeordneten Adaptern;
- Fig. 2 -: eine Frontansicht des Sitzuntergestells gemäß Fig. 1;
- Fig. 3 -: eine vergrößerte Detailansicht des am Querrohr angeordneten Adapters gemäß den Fig. 1 und 2 mit einer Befestigung des Adapters an einem Lagerbock des Querrohrs;
- Fig. 4 -: eine vergrößerte Detailansicht eines an einem Sitzseitenteil befestigten Adapters;
- Fig. 5 -: einen Schnitt durch einen in den Endbereich eines Querrohres einsetzbaren Adapter mit einem Stufenbolzen und einem Adapterflansch und
- Fig. 6 -: eine perspektivische Darstellung eines drehfest mit einem Querrohr verbundenen Adapters und einer an einer Blende eines Sitzseitenteils befestigten Gurtschlossführung.

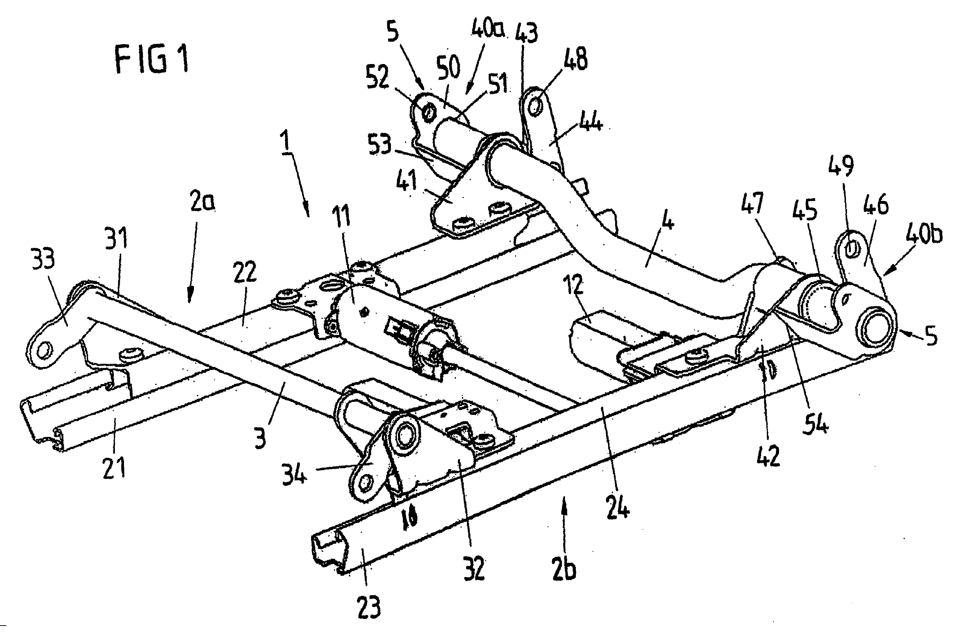

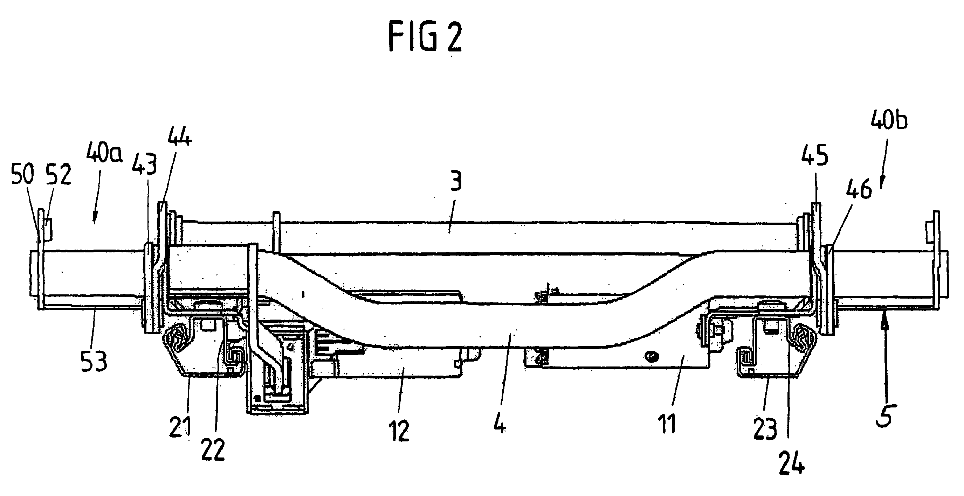

Fig. 1 zeigt in perspektivischer Ansicht ein Sitzuntergestell 1 eines längsverstellbaren Fahrzeugsitzes mit zwei Schienenlängsführungen 2a und 2b einer Längsverstelleinrichtung des Fahrzeugsitzes mit jeweils einer mit einem Fahrzeugboden verbundenen Unterschiene 21, 23, in denen gemäß Fig. 2 Oberschienen 22, 24 in Längsrichtung verstellbar geführt sind.

Zur Längsverstellung des Fahrzeugsitzes ist ein Verstellantrieb 11 vorgesehen, der beispielsweise an den Oberschienen 22, 24 angebunden ist und dessen Welle über endseitige Ritzel in mit den Unterschienen 21, 23 verbundene Zahnstangen eingreift, so dass bei einer Drehung der Motorwelle des Verstellantriebs 11 in der einen oder anderen Drehrichtung eine entsprechende Sitzverstellung erfolgt.

An den vorderen Enden der Oberschienen 22, 24 sind vordere Lagerböcke 31, 32 angelenkt, die eine Traverse 3 aufnehmen, an deren Enden vordere Schwenkstützen 33, 34 zur Aufnahme des vorderen Endes einer Sitzwanne des Fahrzeugsitzes angeordnet sind. An den hinteren Enden der Oberschienen 22, 24 sind hintere Lagerböcke 41, 42 befestigt, in denen ein Querrohr 4 gelagert ist. Das Querrohr 4 ist mit hinteren Schwenkstützen 43, 44 bzw. 45, 46 verbunden, die über Bohrungen 48, 49 mit dem hinteren Ende der Sitzwanne des Fahrzeugsitzes verbindbar sind. Das Querrohr 4 ist weiterhin über eine Kurbel 47 mit einem Antriebsmotor 12 verbunden und wird bei einer Betätigung des Antriebsmotors 12 in der einen oder anderen Richtung gedreht, so dass über die Kurbel 47 die hinteren Schwenkstützen 43, 44 bzw. 45, 46 verstellt und die Sitzwanne des Fahrzeugsitzes zur Höhenverstellung des Fahrzeugsitzes angehoben oder abgesenkt wird.

An den über die hinteren Lagerböcke 41, 42 überstehenden Endbereichen 40a, 40b des Querrohrs 4 sind Adapter 5 mit dem Querrohr 4 verbunden, die aus einem Adapterflansch 50 und einem Verbindungsflansch 53 zusammengesetzt sind und eine Bohrung 52 zur Anbindung eines Gurtschlosses bzw. einer endseitig mit einem Gurtschloss verbundenen Gurtpeitsche aufweisen. Der Adapterflansch 50 weist eine Öffnung 51 auf, die auf das Querrohr 4 aufsteckbar ist, so dass der Adapterflansch 50 in der Nähe des stirnseitigen Endes 40 des Querrohres 4 angeordnet ist. Der Verbindungsflansch 53 ist in diesem Ausführungsbeispiel rechtwinklig vom Adapterflansch 50 abgewinkelt und mit dem Lagerbock 41, 42 beispielsweise über eine Schweißnaht 54 verbunden.

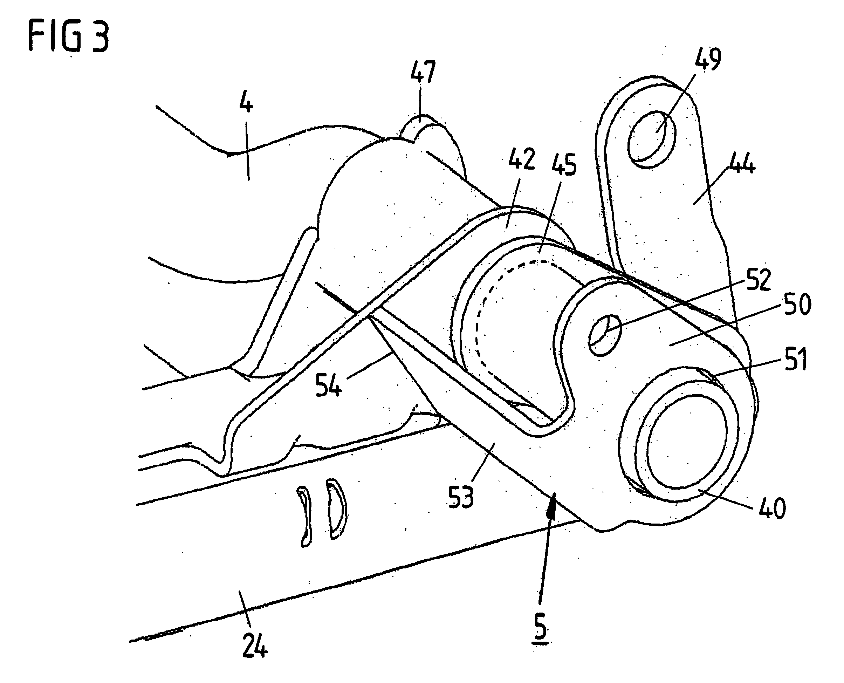

Die Öffnung 51 des Adapterflansches 50 ist entsprechend der Detailansicht gemäß Fig. 3 passgenau auf das Querrohr 4 aufgesteckt, lässt aber eine Drehung des Querrohres 4 innerhalb der Öffnung 51 zu. Durch die Verbindung des Adapters 5 mit den Lagerböcken 41, 42 bleibt somit der Anlenkpunkt für das Gurtschloss in Bezug auf die Sitzwanne oder das Sitzseitenteil des Fahrzeugsitzes unabhängig von der Höheneinstellung des Fahrzeugsitzes konstant, so dass keine zusätzlichen Maßnahmen zur Ausrichtung des Gurtschlosses erforderlich sind.

Durch die unmittelbare Verbindung des Adapters 5 mit dem Querrohr 4 werden auf den Sicherheitsgurt und damit auf das Gurtschloss einwirkende Crashkräfte unmittelbar über den Adapterflansch 50 und die Bohrung 51 in das Querrohr 4 eingeleitet, so dass keine Kraftumleitung über einen Haltewinkel oder dergleichen erfolgt. Über die Lagerböcke 41, 42 werden die vom Sicherheitsgurt ausgehenden Crashkräfte auf die Oberschienen 22, 24 der Schienenlängsführungen 2a, 2b verteilt, so dass eine im wesentlichen gleichmäßige Lastverteilung auf die Schienenlängsführungen 2a, 2b der Längsverstelleinrichtung erfolgt.

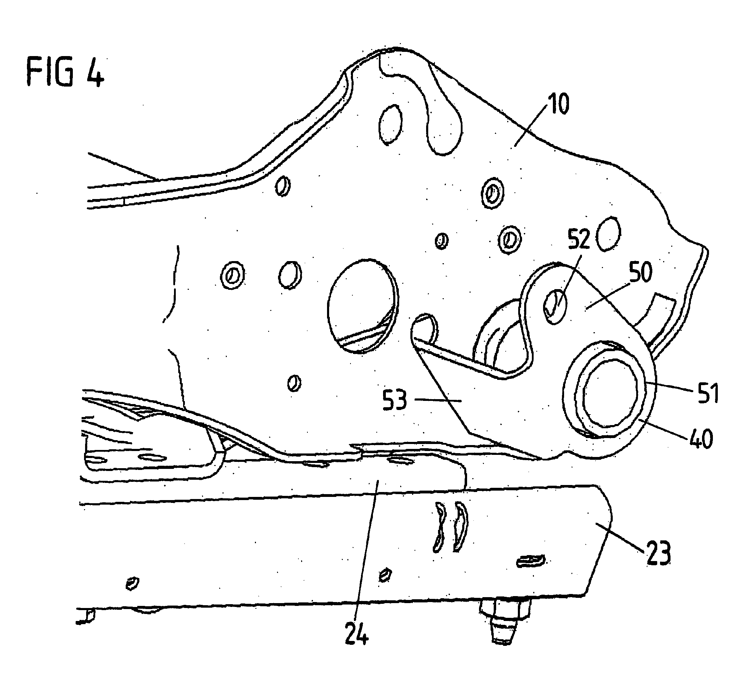

Die in Fig. 4 perspektivisch dargestellte Detailansicht zeigt eine Verbindung des Adapters 5 mit einem Sitzseitenteil 10 des Fahrzeugsitzes, indem der Verbindungsflansch 53 des Adapters 5 über eine Schweißverbindung 54 mit dem Sitzseitenteil 10 verbunden ist. Der Aufbau und die Funktion des Adapters 5 entspricht dem in den Fig. 1 bis 3 dargestellten Aufbau des Adapters 5 und dessen Anordnung am Querrohr 4 sowie dessen Funktion, so dass auf die vorstehende Beschreibung Bezug genommen wird.

Die Länge des Verbindungsflansches 53 hängt im wesentlichen von dessen Anbindung an einem Befestigungsmittel des Sitzuntergestells, beispielsweise den Lagerböcken 41, 42 bzw. dem Seitenteil 10, sowie dem Abstand des Adapterflansches 50 von dem Befestigungsmittel ab. Da der Adapterflansch 50 wegen der Anbindung und Ausrichtung des Gurtschlosses zweckmäßigerweise im Bereich des stirnseitigen Endes 40 des Querrohres 4 angeordnet wird, hängt die Länge des Verbindungsflansches 53 von den über die Lagerböcke 41, 42 seitlich hinausragenden Endbereichen 40a, 40b des Querrohres 4 ab. Bei einem gegenüber dem in den Fig. 1 und 2 dargestellten Abstand der Schienenlängsführungen 2a, 2b kürzeren Abstand der Schienenlängsführungen 2a, 2b verkürzt sich entsprechend die Länge der Endbereiche 40a, 40b des Querrohres 4, so dass sich entsprechend auch die Länge der Verbindungsflansche 53 verkürzt.

Während bei der in den Fig. 1 bis 3 dargestellten Anordnung der Adapter 5 wegen der Verbindung des Querrohres 4 mit den Oberschienen 22, 24 der Schienenlängsführungen 2a, 2b in gleichbleibender Höhe vom Fahrzeugboden entfernt befindet, ist bei der Anordnung gemäß Fig. 4 sichergestellt, dass der Adapter 5 in Bezug auf die Sitzwanne und damit in Bezug auf das Sitzkissen des Fahrzeugsitzes eine gleichbleibende Stellung unabhängig von der Höheneinstellung des Fahrzeugsitzes behält, da das Querrohr 4 in dieser Ausführungsform am Sitzseitenteil 10 abgestützt und über die Schwenkstützen mit den Oberschienen 22, 24 der Schienenlängsführungen 2a, 2b der Längsverstelleinrichtungen verbunden ist.

Alternativ zu der in den Fig. 1 bis 4 dargestellten Bauform des Adapters 5 und dessen Anordnung am Querrohr 4 kann der Adapterflansch 50 auch auf der Innenseite der Lagerböcke 41, 42 angeordnet werden und ein Verbindungsflansch vom Adapterflansch 50 zur Anbindung des Gurtschlosses seitlich herausgeführt werden.

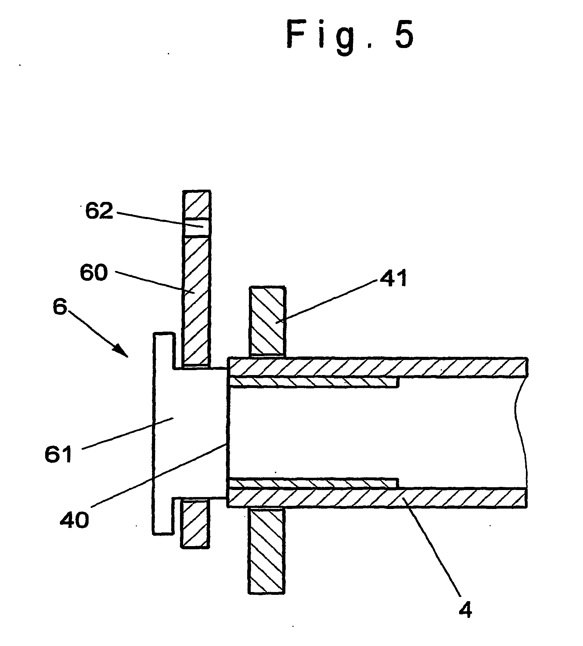

Eine weitere Alternative ist in Fig. 5 dargestellt. Die in Fig. 5 dargestellte Ausführungsform eignet sich insbesondere für Anwendungsfälle, bei denen sich das stirnseitige Ende 40 des Querrohres 4 unmittelbar am Lagerbock 41 befindet, so dass der in den Fig. 1 bis 4 dargestellte Adapter 5 mit seinem Adapterflansch 50 auf der dem stirnseitigen Ende 40 des Querrohres 4 abgewandten Seite des Lagerbocks 41 anzuordnen wäre.

Bei der in Fig. 5 dargestellten Ausführungsform besteht der Adapter 6 aus einem in das stirnseitige Ende 40 des Querrohres 4 einsetzbaren Stufenbolzen 61, der mit einem Adapterflansch 60 verbunden ist, an dem eine Anbindung 62 zur Verbindung mit einem Gurtschloss vorgesehen ist. Der Stufenbolzen 61 kann beispielsweise mit Presspassung in die stirnseitige Öffnung 40 des Querrohres 4 eingesetzt, über eine Schraubverbindung mit dem Querrohr 4 oder in beliebiger anderer Weise mit dem Querrohr 4 verbunden werden, wenn sichergestellt ist, dass Crashkräfte sicher auf das Querrohr 4 übertragen werden.

Die Verbindung des Stufenbolzen 61 mit dem Adapterflansch 60 kann drehfest oder drehbar erfolgen, so dass bei einer Drehung des Querrohres 4 der Adapterflansch 60 der Drehung des Querrohres 4 folgt oder durch eine entsprechende Verbindung des Adapterflansches 60 mit einem Befestigungsmittel des Fahrzeugsitzes wie in den Fig. 1 bis 4 dargestellt, gleichbleibend ausgerichtet ist.

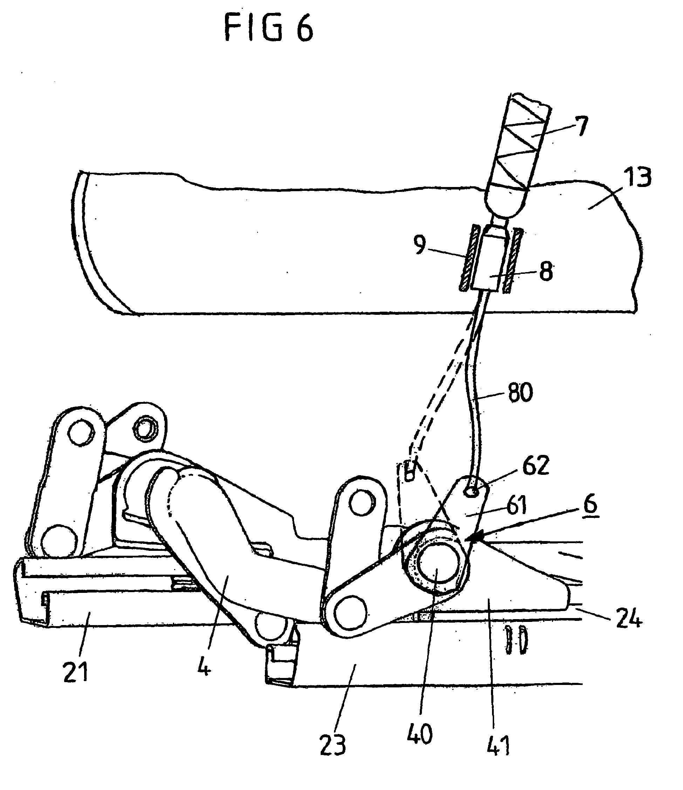

Fig. 6 zeigt eine schematisch-perspektivische Darstellung der Anordnung des in Fig. 5 dargestellten Adapters 6 am stirnseitigen Ende eines Querrohres 4, das in einem Lagerbock 41 geführt ist, der mit der Oberschiene 24 einer Längsverstelleinrichtung eines Fahrzeugsitzes verbunden ist. Der Adapter 6 ist drehfest mit dem Querrohr 4 verbunden, so dass er bei einer Drehung des Querrohres 4 seine Ausrichtung und damit den Anlenkpunkt 62 des Adapterflansches 61 verändert.

In Fig. 6 ist die unterschiedliche Ausrichtung des Adapterflansches 61 und damit des Anlenkpunktes 62 in durchgezogenen und gestrichelten Linien dargestellt. Da sich die Ausrichtung der Gurtpeitsche 80 und damit des Gurtschlosses 8 mit der Veränderung des Anlenkpunktes 62 am Adapterflansch 60 des Adapters 6 verändern würde, eine gleichbleibende Ausrichtung aber für den geforderten Bedienungskomfort unerlässlich ist, ist eine Gurtschlossführung 9 vorgesehen, in der das Gurtschloss 8 gelagert ist. Die Gurtschlossführung 9 ist an einer Blende 13 am Sitzseitenteil des Fahrzeugsitzes angeordnet. Dadurch bleibt unabhängig von der Winkeistellung des Querrohres 4 und damit von der Ausrichtung des Adapters 6 die Ausrichtung des Gurtschlosses 8, das über die Gurtpeitsche 80 mit dem Anlenkpunkt 62 des Adapters 6 verbunden ist, erhalten, wobei sich bei einer Verstellung des Querrohres 4 lediglich die Oberkante des Gurtschlosses 8 zur Aufnahme des Sicherheitsgurtes 7 verändert.

### Bezugszeichenliste

- 1: Sitzuntergestell
- 2a, 2b: Schienenlängsführungen
- 3: Traverse
- 4: Querrohr
- 5, 6: Adapter
- 7: Sicherheitsgurt
- 8: Gurtschloss
- 9: Gurtschlossführung
- 10: Sitzseitenteil
- 11: Verstellantrieb
- 12: Antriebsmotor
- 13: Blende
- 21, 23: Unterschiene
- 22, 24: Oberschiene
- 31, 32: vordere Lagerböcke
- 33, 34: vordere Schwenkstützen
- 40: stimseitiges Ende des Querrohres 4
- 40a, 40b: Endbereiche des Querrohres 4
- 41, 42: hintere Lagerböcke
- 43 - 46: hintere Schwenkstützen
- 47: Kurbel
- 48, 49: Bohrungen
- 50: Adapterflansch
- 51: Öffnung
- 52: Bohrung
- 53: Verbindungsflansch
- 54: Schweißnaht
- 60: Adapterflansch
- 61: Stufenbolzen
- 62: Bohrung
- 80: Gurtpeitsche

## Patentansprüche

1. Vorrichtung zum Befestigen eines Gurtschlosses (8) eines Sicherheitsgurtes an einem Fahrzeugsitz mit einem Sitzuntergestell (1), das mindestens ein in Y-Richtung des Fahrzeugs verlaufendes, schwenkbar gelagertes Querrohr (4) aufweist, das Teil einer Sitzverstellvorrichtung ist,
**gekennzeichnet durch**
einen Adapter (5, 6) mit einem den Endbereich (40a, 40b) des Querrohres (4) drehbeweglich aufnehmenden Adapterflansch (50, 60) zur Anbindung des Gurtschlosses (8) und einem fest mit einem Basiselement (10; 41, 42) des Fahrzeugsitzes verbundenen Verbindungsflansch (53).

2. Vorrichtung nach Anspruch 1, **dadurch gekennzeichnet, dass** der Adapter (5) auf das Querrohr (4) aufgesteckt ist und das Querrohr (4) eine Öffnung (51) des Adapterflansches (50) drehbeweglich durchgreift.

3. Vorrichtung nach Anspruch 1 oder 2, **dadurch gekennzeichnet, dass** das Basiselement aus einem das Querrohr (4) aufnehmenden und mit einem Teil der Schienenlängsführung (2a; 2b) des Fahrzeugsitzes verbundenen Lagerbock (41, 42) besteht.

4. Vorrichtung nach Anspruch 1 oder 2, **dadurch gekennzeichnet, dass** das Basiselement aus einem Sitzseitenteil (10) des Fahrzeugsitzes besteht.

5. Vorrichtung nach mindestens einem der voranstehenden Ansprüche, **dadurch gekennzeichnet, dass** der Adapter (6) aus einem in das stirnseitige Ende (40) des Querrohres (4) einsetzbaren Bolzen (61) besteht, der eine Öffnung des Adapterflansches (60) drehbar durchgreift.

6. Vorrichtung nach mindestens einem der voranstehenden Ansprüche, **gekennzeichnet durch** eine mit dem Sitzseitenteil (10) des Fahrzeugsitzes verbundene Gurtschlossführung (9) zur Aufnahme des Gurtschlosses (8)

7. Vorrichtung zum Befestigen eines Gurtschlosses (8) eines Sicherheitsgurtes an einem Fahrzeugsitz mit einem Sitzuntergestell (1), das mindestens ein in Y-Richtung des Fahrzeugs verlaufendes, schwenkbar gelagertes Querrohr (4) aufweist, das Teil einer Sitzverstellvorrichtung ist,
**gekennzeichnet durch**
einen Adapter (6) mit einem mit dem Endbereich (40a, 40b) des Querrohres (4) drehfest verbundenden Adapterflansch (60) und eine das Gurtschloss (8) aufnehmende Gurtschlossführung (9).

8. Vorrichtung nach Anspruch 7, **dadurch gekennzeichnet, dass** der Adapter (6) aus einem in das stirnseitige Ende (40) des Querrohres (4) einsetzbaren Bolzen (61) besteht

9. Vorrichtung nach Anspruch 5 oder 8, **dadurch gekennzeichnet, dass** der Bolzen (61) als Stufenbolzen ausgebildet ist.

10. Vorrichtung nach mindestens einem der voranstehenden Ansprüche, **dadurch gekennzeichnet, dass** die Gurtschlossführung (9) mit einer Blende (13) des Sitzseitenteils (10) des Fahrzeugsitzes verbunden ist.

11. Vorrichtung nach mindestens einem der voranstehenden Ansprüche, **dadurch gekennzeichnet, dass** der Adapter (5, 6) mit beiden Endbereichen (40a, 40b) des Querrohres (4) verbunden ist.

## Claims

1. Device for fixing a belt lock (8) of a safety belt on a vehicle seat with a seat underframe (1) which has at least one pivotally mounted cross tube (4) running in the Y-direction of the vehicle and forming part of a seat adjusting device,
**characterised by**
an adapter (5,6) provided with an adapter flange (50, 60) for connecting the belt lock (8) and holding the end region (40a, 40b) of the cross tube (4) in rotational movement and with a connecting flange (53) fixedly connected to a base element (10; 41, 42) of the vehicle seat.

2. Device according to claim 1, **characterised in that** the adapter (5) is pushed onto the cross tube (4) and the cross tube (4) engages with rotational movement through an opening (51) in the adapter flange (50).

3. Device according to claim 1 or 2, **characterised in that** the base element consists of a bearing block (41, 42) holding the cross tube (4) and connected to a part of the longitudinal rail guide (2a; 2b) of the vehicle seat.

4. Device according to claim 1 or 2, **characterised in that** the base element consists of a seat side part (10) of the vehicle seat.

5. Device according to at least one of the preceding claims, **characterised in that** the adapter (6) consists of a bolt (61) which can be inserted in the side end (40) of the cross tube (4) and which engages rotatably through an opening in the adapter flange (60).

6. Device according to at least one of the preceding claims, **characterised by** a belt lock guide (9) for holding the belt lock (8) and connected to the seat side part (10) of the vehicle seat.

7. Device for fixing a belt lock (8) of a safety belt on a vehicle seat with a seat underframe (1) which has at least one pivotally mounted cross tube (4) running in the Y-direction of the vehicle and forming part of a seat adjusting device,
**characterised by**
an adapter (6) with an adapter flange (60) connected rotationally secured to the end region (40a, 40b) of the cross tube (4) and by a belt lock guide (9) which receives the belt lock (8).

8. Device according to claim 7, **characterised in that** the adapter (6) consists of a bolt (61) which can be inserted in the side end (40) of the cross tube (4).

9. Device according to claim 5 or 8, **characterised in that** the bolt (61) is designed as a stepped bolt.

10. Device according to at least one of the preceding claims, **characterised in that** the belt lock guide (9) is connected to a cover panel (13) of the seat side part (10) of the vehicle seat.

11. Device according to at least one of the preceding claims, **characterised in that** the adapter (5, 6) is connected to the two end regions (40a, 40b) of the cross tube (4).

## Revendications

1. Dispositif pour fixer une boucle (8) de ceinture de sécurité à un siège de véhicule comprenant une ossature inférieure de siège (1) qui comprend au moins un tube transversal (4) s'étendant dans la direction Y du véhicule, monté en pivotement, et formant partie d'un dispositif de réglage du siège,
**caractérisé par** un adaptateur (5, 6) comportant une bride d'adaptateur (50, 60) qui reçoit avec possibilité de rotation la région terminale (40a, 40b) du tube transversal (4), et qui est destiné à relier la boucle de ceinture (8) à une bride de liaison (53) reliée fermement à un élément de base (10 ; 41, 42) du siège de véhicule.

2. Dispositif selon la revendication 1, **caractérisé en ce que** l'adaptateur (5) est enfilé sur le tube transversal (4), et le tube transversal (4) traverse avec possibilité de rotation une ouverture (51) de la bride d'adaptateur (50).

3. Dispositif selon la revendication 1 ou 2, **caractérisé en ce que** l'élément de base est constitué par un bloc de montage (41, 42) qui reçoit le tube transversal (4) et qui est relié à une partie du guidage longitudinal à rail (2a ; 2b) du siège de véhicule.

4. Dispositif selon la revendication 1 ou 2, **caractérisé en ce que** l'élément de base est constitué par une partie latérale (10) de l'assise du siège de véhicule.

5. Dispositif selon l'une au moins des revendications précédentes, **caractérisé en ce que** l'adaptateur (6) est constitué par un goujon (61) susceptible d'être mis en place dans l'extrémité frontale (40) du tube transversal (4) et qui traverse avec possibilité de rotation une ouverture de la bride d'adaptateur (60).

6. Dispositif selon l'une au moins des revendications précédentes, **caractérisé par** un guidage de boucle (9), relié à la partie latérale (10) de l'assise du siège de véhicule, pour recevoir la boucle de ceinture (8).

7. Dispositif pour fixer une boucle (8) d'une ceinture de sécurité sur un siège de véhicule comprenant une ossature inférieure de siège (1) qui comprend au moins un tube transversal (4) s'étendant dans la direction Y du véhicule, monté en pivotement, et formant partie d'un dispositif de réglage du siège,
**caractérisé par** un adaptateur (6) avec une bride d'adaptateur (60) reliée solidairement en rotation à la région terminale (40a, 40b) du tube transversal (4) et un guidage de boucle (9) qui reçoit la boucle de ceinture (8).

8. Dispositif selon la revendication 7, **caractérisé en ce que** l'adaptateur (6) est constitué par un goujon (61) susceptible d'être mis en place dans l'extrémité frontale (40) du tube transversal (4).

9. Dispositif selon la revendication 5 ou 8, **caractérisé en ce que** le goujon (61) est réalisé comme un goujon à gradins.

10. Dispositif selon l'une au moins des revendications précédentes, **caractérisé en ce que** le guidage de boucle (9) est relié à un cache (13) de la partie latérale (10) du siège de véhicule.

11. Dispositif selon l'une au moins des revendications précédentes, **caractérisé en ce que** l'adaptateur (5, 6) est relié aux deux régions terminales (40a, 40b) du tube transversal (4).
